# EUROPEAN PATENT SPECIFICATION

(11) **EP 2 687 711 B1**
(45) Date of publication and mention of the grant of the patent: **08.07.2015**
(21) Application number: 12177380.8
(22) Date of filing: 20.07.2012
(51) Int. Cl.: G05D 16/06, F02M 37/00

(54) **Fuel pressure regulator assembly having a water collector**
Brennstoffdruckregleranordnung mit Wassersammler
Ensemble régulateur de pression de carburant ayant un collecteur d'eau

(43) Date of publication of application: 22.01.2014
(73) Proprietor: Delphi Automotive Systems Luxembourg SA, 4940 Bascharage (LU)
(72) Inventor: Frilling, Andreas, 5417 Ehnen (LU); Raimann, Norbert, 54456 Tawern (DE); Borrelbach, Lutwin, 54636 Messerich (DE)
(74) Representative: Delphi France SAS

(56) References cited:
- EP-A1- 0 754 483
- WO-A1-01/79683
- FR-A1- 2 485 098
- US-A- 5 649 514
- US-A1- 2011 000 463

## Description

### TECHNICAL FIELD

The present invention relates generally to a fuel pressure regulator assembly for an automotive vehicle.

### BACKGROUND OF THE INVENTION

It is known to provide a fuel system for a vehicle, which includes a fuel tank, a fuel delivery module having an electrical fuel pump, a fuel filter, a fuel pressure regulator, a fuel rail, and fuel injectors. The pressure regulator, which is mounted in an adaptor housing inside the fuel delivery module, is used to maximize the fuel system pressure and to release at a designed pressure level the fuel pressure into the fuel tank.

Said adaptor housing comprises an intermediate chamber which is closed at its bottom part by the fuel pressure regulator and which is provided with an inlet and an outlet openings communicating through inlet and outlet pipes with a fuel supply line connected to a fuel pump.

The fuel pressure regulator comprises a casing with a fuel inlet for fluid communication between the intermediate chamber and a regulator chamber, said regulator chamber being closed by a valve member controlled by a flexible diaphragm.

The fuel used with such a fuel system may contain particulate contaminations and especially water. The water is normally collected at the bottom of the fuel tank. This water can be sucked up by the fuel tank lift pump in the fuel delivery module and can then be pushed forward to the vehicle engine through the fuel supply line. When the lift pump is stopped, the fuel is standing in the pipes of the fuel supply line and the water, which is poorly mixed with the fuel, flows by gravity to the lowest point in the fuel system. This lowest point is often the fuel delivery module. In the fuel delivery module, the water concentrates mainly in components like pump, strainers, pipes and fuel pressure regulator. US2011/000463 discloses a fuel pressure regulator assembly for a vehicule mounted in an adaptor comprising an intermediate chamber which is closed at its bottom part by the pressure regulator.

Because the fuel pressure regulator is one of the lowest points in the piping system of the fuel delivery module, the water builds up on the flexible membrane. In cold conditions, at engine start, the fuel can have a temperature below the water freezing point such that the water located on the flexible membrane can freeze which prevents the fuel pressure regulator from working properly. As a consequence, the lift pump can over pressurize the fuel system so the regulator valve member does not open at the designed maximal pressure which can lead to some damages in the fuel system.

The present invention aims at solving the above mentioned problem.

### SUMMARY OF THE INVENTION

The present invention proposes a fuel pressure regulator assembly for an automotive vehicle comprising a fuel pressure regulator which is mounted in an adaptor housing along a main axis, said adaptor housing comprising an intermediate chamber which is closed at its bottom part by the fuel pressure regulator and which is provided with at least one opening for communication with a fuel supply line, said fuel pressure regulator comprising a casing having at least one fuel inlet in its upper portion for communication with the intermediate chamber and having at least one fuel outlet in its bottom portion, characterized by a water collector inserted in the intermediate chamber, above the fuel inlet of the fuel pressure regulator, said water collector comprising a recess portion facing the opening in order to retain water flowing down by gravity from the opening while the fuel pump is idle.

Thanks to the invention, water substances are retained in the water collector which forms a liquid trap thus preventing said water to flow into the fuel pressure regulator through the fuel inlet. The volume of water which can be retained depends on the depth of the water collector recess portion and on the inclination of the fuel delivery module while the fuel pump is idle.

Advantageously, the solution provided by the present invention does not need modifications of the adaptor housing because the water collector is inserted in the free axial space above the fuel pressure regulator, in the intermediate chamber.

The water collector can be retained axially in the adaptor housing by the fuel pressure regulator when it is coupled to the adaptor housing. So the water collector does not need coupling means to be mounted in the adaptor housing.

According to other advantageous features of the invention:
- said water collector has an annular shape with a central bore for communication between the intermediate chamber and the fuel inlet of the fuel pressure regulator;
- said recess portion has a substantially U-shaped axial section;
- said recess portion of the water collector is substantially annular;
- the inner peripheral wall of the recess portion is higher than the outer peripheral wall;
- said central bore has a tapered lower portion;
- the bottom of the water collector has an annular radial surface forming an abutment surface for the fuel pressure regulator;
- said water collector is press-fitted into the adaptor housing;
- said intermediate chamber has at least an inlet opening communicating with the upstream portion of the fuel supply line and an outlet opening communicating with the downstream portion of the fuel supply line, each one of the openings facing a section of the water collector recess portion;

The invention also proposes:
- a fuel delivery module assembly characterized by having a fuel pressure regulator assembly including previously mentioned features,
- a fuel tank comprising a removable tank cover characterized by having a fuel pressure regulator assembly arranged on the tank cover including previously mentioned features.

### BRIEF DESCRIPTION OF THE DRAWINGS

The present invention is now described by way of example with reference to the accompanying drawings in which:
- Figure 1 is a cross-section view showing schematically a fuel delivery module comprising a fuel pressure regulator assembly having a water collector according to an embodiment of the present invention;
- Figure 2 is an enlarged cross-section view showing schematically the arrangement of the water collector in the fuel pressure regulator assembly of figure 1 when water is flowing down;
- Figure 3 is a cross-section view similar to figure 2 showing the arrangement when fuel is conveyed through the fuel pressure regulator assembly towards an engine;
- Figure 4 is a cross-section view showing schematically an alternative embodiment wherein the fuel pressure regulator assembly is attached the tank cover of a fuel tank.

### DESCRIPTION OF THE PREFERRED EMBODIMENT

In the following description, similar parts can be designated by same references.

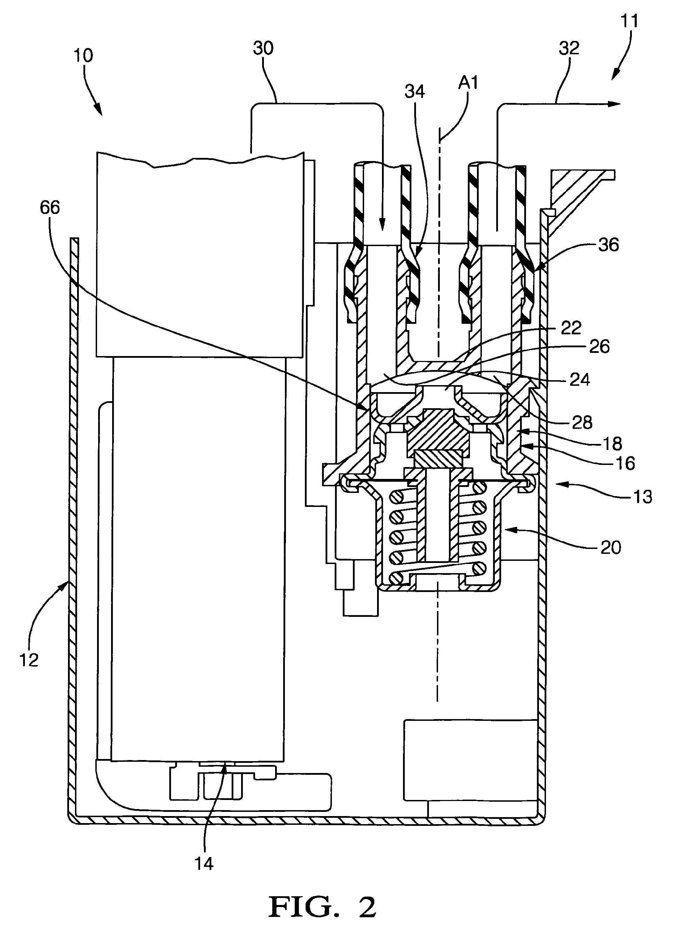

Referring to figure 1, an embodiment of a fuel delivery module assembly 10 for the fuel system (not shown) of an automotive vehicle is shown. The fuel delivery module assembly 10 is arranged within a fuel tank (not shown) to hold liquid fuel. The fuel delivery module assembly 10 is mounted in the fuel supply line 11 of the fuel system to deliver fuel from the fuel tank to an engine (not shown) of the vehicle.

The fuel delivery module assembly 10 includes a fuel reservoir 12 having an electrical fuel pump 14 mounted therein and a fuel pressure regulator assembly 13 according to the teaching of the present invention. The fuel pressure regulator assembly 13 includes an adaptor housing 16 extending along a main axis A1. In the present description, the main axis A1 is substantially vertical.

Said adaptor housing 16 has a substantially cylindrical and tubular main portion 18 which opens up downwardly to receive a fuel pressure regulator 20 and which is closed upwardly by a roof portion 22, delimiting an intermediate chamber 24. Said roof portion 22 comprises an inlet opening 26 and an outlet opening 28 which communicate with the upstream portion 30 of the fuel supply line 11 and with the downstream portion 32 of the fuel line 11 through an inlet connection pipe 34 and an outlet connection pipe 36 substantially parallel to the main axis A1.

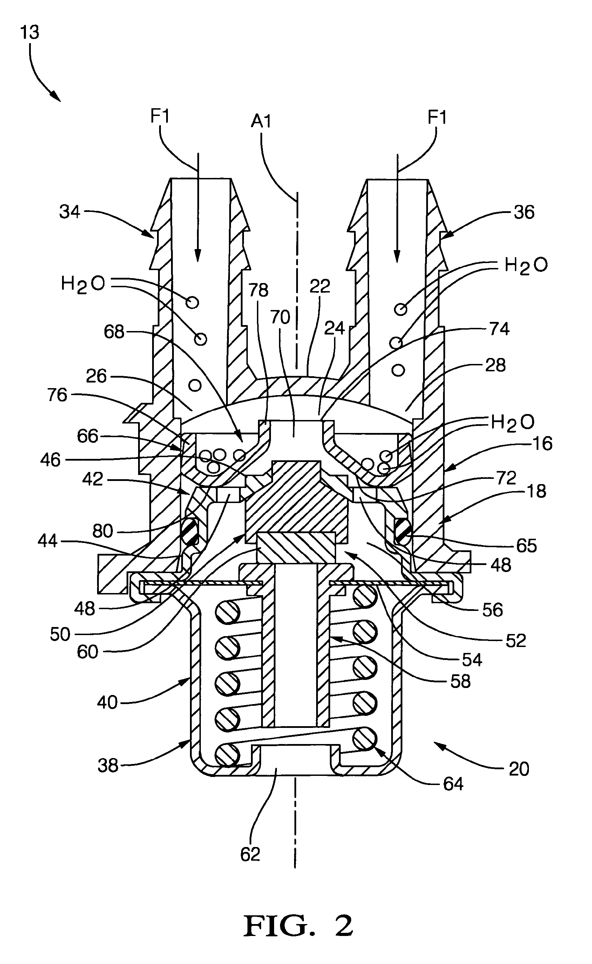

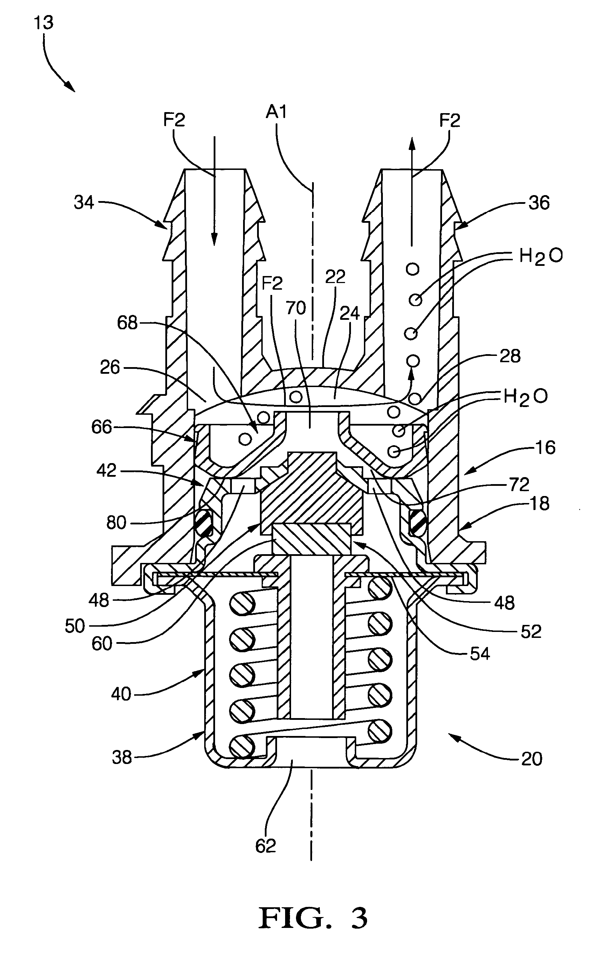

According to the present embodiment shown more in detail on figures 2 and 3, the fuel pressure regulator 20 comprises a casing 38 defined by a can-shaped body 40 and a cap 42. The cap 42 comprises a substantially tubular peripheral wall 44 having substantially the same outer diameter as the inner diameter of the adaptor housing main portion 18 and an upper end wall 46 provided with peripheral fuel inlets 48, arranged around a central portion 50 forming part of a valve assembly 52 of the fuel regulator 20.

According to the present embodiment, the valve assembly 52 comprises a flexible diaphragm 54 which is received between the cap 42 and the can-shaped body 40 and which defines a regulator chamber 56 between the upper side of the diaphragm 54 and the cap 42. The flexible diaphragm 54 is provided with a valve member 58 cooperating with a valve seat 60 provided on the cap central portion 50 in order to allow fuel to flow out of the regulator chamber 56, through the diaphragm 54 and through a fuel outlet 62 provided in the bottom end of the can-shaped body 40, when the fuel pressure in the regulator chamber 56 is above a predefined pressure level. A coil spring 64 is disposed within the can-shaped body 40 to yieldably bias the diaphragm 54 and the valve member 58 against the valve seat 60.

Preferably, the casing 38 of the fuel pressure regulator 20 is provided with a seal 65, such as an o-ring, to ensure fluid-tight connection between the fuel pressure regulator 20 and the adaptor housing 16.

The embodiment shown schematically on the figures and described above is only an example. Of course, the fuel regulator 20 could be of a different type.

According to the teaching of the present invention, the fuel pressure regulator assembly 13 comprises a water collector 66 which is inserted in the intermediate chamber 24, above the fuel inlets 48 of the fuel pressure regulator 20. Said water collector 66 comprises a recess portion 68 facing the inlet and outlet openings 26, 28 in order to retain water (H₂O) flowing down by gravity from these openings 26, 28 while the fuel pump 14 is not working. On figures 2 and 3, the water flowing down by gravity and collected in the water collector 66 has been represented schematically as little circles, the arrows F1 representing the water flow.

According to the embodiment shown, the water collector 66 has an annular shape with a central bore 70 for communication between the upper portion of the intermediate chamber 24 and the fuel inlets 48 of the fuel pressure regulator 20. The central bore 70 is facing the roof portion 22. The water collector 66 forms an annular cup, or tray, with an annular groove forming the recess portion 68, said annular groove having a substantially U-shape section. Advantageously, the central bore 70 has a lower tapered portion 72 so that it flares out downwardly and ensures good fluid communication radially from the central bore upper end 74 to the fuel inlets 48 which are off axis with regards to the central bore 70. Said tapered portion 72 defines here with the central portion 50 of the fuel pressure regulator 20 a diagonal fluid passage from the central bore 70 to the fuel inlets 48.

The water collector 66 has an outer peripheral axial wall 76 which defines with the inner peripheral wall 78 how deep the water collector 66 can be. The bottom face of the water collector 66 defines an annular radial surface 80 facing an upper end portion of the fuel pressure regulator 20, potentially acting as an abutment surface for the fuel pressure regulator 20. Advantageously, said annular radial surface 80 is shifted outwardly with regards to the fuel inlets 48 in order to ensure that the fuel inlets 48 could not be covered or closed by the water collector 66.

The water collector 66 has an external diameter corresponding to the diameter of the intermediate chamber 24 in order to fit into the tubular main portion 18 of the adaptor housing 16 and prevent water from flowing down between the water collector outer wall 76 and the tubular main portion 18.

Advantageously, the water collector 66 is press-fitted or axially inserted into the adaptor housing 16 before coupling the fuel pressure regulator 20 to the adaptor housing 16. Once the fuel pressure regulator 20 is coupled to the adaptor housing 16, the water collector 66 is retained axially in the adaptor housing 16 by an upper radial surface in the intermediate chamber 24 and by the upper end surface of the fuel pressure regulator 20.

The water collector 66 upper end delimits an axial space with the roof portion 22 in order to ensure fluid communication from the inlet opening 26 to the outlet opening 28, and from the inlet and outlet openings 26, 28 to the regulator chamber 56, through the central bore 70.

Advantageously, the water collector inner wall 78 is higher than the outer wall 76, taking advantage of the roof portion height in the central part of the intermediate chamber 24 which is taller than in the peripheral part. The higher inner wall 78 minimize the risk of water flowing into the central bore 70, especially when the fuel pressure regulator assembly 13 is tilted, for example when the vehicle equipped with the fuel pressure regulator assembly 13 is tilted.

Referring more particularly to figure 2 and 3, the functioning of the fuel delivery module 10 according to the invention will be described.

When the fuel pump 14 is idle, there is no more fuel flow within the intermediate chamber 24 so the water, which was poorly mixed with the fuel, slightly flows down by gravity F1 from the fuel line 11 through the inlet and outlet connection pipes 34, 36 to the intermediate chamber 24. Thanks to the water collector 66 and its recess portion 68 arranged in alignment with the inlet and outlet openings 26, 28, the water is collected within the recess portion 68.

The quantity of water to be collected being generally very low, it remains in the water collector 66 until the next start of the fuel pump 14.

When the fuel pump 14 is started, the fuel is conveyed through the inlet connection pipe 34 to the outlet connection pipe 36, passing through the intermediate chamber 24 which is in communication with the regulator chamber 56. The corresponding fuel flow F2 towards the engine generates a suction effect in the intermediate chamber 24 causing the water H2O deposited in the water collector 66 to be sucked up and pushed outwardly towards the engine.

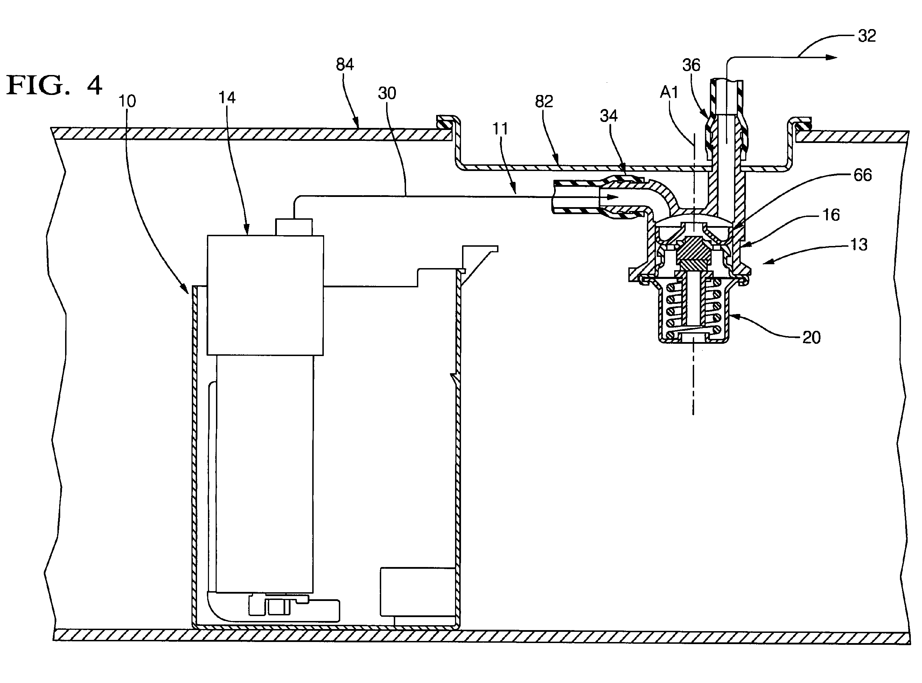

On figure 4, an alternative embodiment of the invention is shown schematically wherein the fuel pressure regulator assembly 13 is arranged on the tank cover 82 of a fuel tank 84, at a distant location with regards to the fuel delivery module 10. In the embodiment shown, the inlet connection pipe 34 extends partially in a transverse direction towards the fuel delivery module 10, whereas the outlet connection pipe 36 extends in a vertical direction through the tank cover 82. Otherwise, the general arrangement of the different parts is substantially the same as for the embodiment of figures 1 to 3, and the fuel pressure regulator assembly 13 works the same.

## Claims

1. Fuel pressure regulator assembly (13) for an automotive vehicle comprising a fuel pressure regulator (20) which is mounted in an adaptor housing (16) along a main axis (A1), said adaptor housing (16) comprising an intermediate chamber (24) which is closed at its bottom part by the fuel pressure regulator (20) and which is provided with at least one opening (26, 28) for communication with a fuel supply line (11), said fuel pressure regulator (20) comprising a casing (38) having at least one fuel inlet (48) in its upper portion for communication with the intermediate chamber (24) and having at least one fuel outlet (62) in its bottom portion,
**characterized by** a water collector (66) inserted in the intermediate chamber (24), above the fuel inlet (48) of the fuel pressure regulator (20), said water collector (66) comprising a recess portion (68) facing the opening (26, 28) in order to retain water flowing down by gravity from the opening (26, 28) while the fuel pump (14) is idle.

2. Fuel pressure regulator assembly (13) according to the preceding claim **characterized by** said water collector (66) having an annular shape with a central bore (70) for communication between the intermediate chamber (24) and the fuel inlet (48) of the fuel pressure regulator (20).

3. Fuel pressure regulator assembly (13) according to the preceding claim **characterized by** said recess portion (68) having a substantially U-shaped axial section.

4. Fuel pressure regulator assembly (13) according to claim 2 or 3 **characterized by** said recess portion (68) of the water collector (66) being substantially annular.

5. Fuel pressure regulator assembly (13) according to the preceding claim **characterized by** the inner peripheral wall (78) of the recess portion (68) being higher than the outer peripheral wall (76).

6. Fuel pressure regulator assembly (13) according to anyone of claims 2 to 5 **characterized by** said central bore (70) having a tapered lower portion (72).

7. Fuel pressure regulator assembly (13) according to anyone of claims 2 to 6 **characterized by** the bottom of the water collector (66) having an annular radial surface (80) forming an abutment surface for the fuel pressure regulator (20).

8. Fuel pressure regulator assembly (13) according to anyone of the preceding claims **characterized by** said water collector (66) being press-fitted into the adaptor housing (16).

9. Fuel pressure regulator assembly (13) according to anyone of the preceding claims **characterized by** said intermediate chamber (24) having at least an inlet opening (26) communicating with the upstream portion of the fuel supply line (11) and an outlet opening (28) communicating with the downstream portion of the fuel supply line (11), each one of the opening (26, 28) facing a section of the water collector recess portion (68).

10. Fuel delivery module assembly (10) **characterized by** having a fuel pressure regulator assembly (13) according to anyone of the preceding claims.

11. Fuel tank (84) comprising a removable tank cover (82) **characterized by** having a fuel pressure regulator assembly (13) according to anyone of claims 1 to 9 which is arranged on the tank cover (82).

## Patentansprüche

1. Kraftstoffdruckregleranordnung (13) für ein Kraftfahrzeug, die einen Kraftstoffdruckregler (20) aufweist, der in einem Adaptergehäuse (16) entlang einer Hauptachse (A1) angebracht ist, wobei das Adaptergehäuse (16) eine Zwischenkammer (24) aufweist, die an ihrem unteren Teil durch den Kraftstoffdruckregler (20) geschlossen ist und die mit zumindest einer Öffnung (26, 28) zur Kommunikation mit einer Kraftstoffversorgungsleitung (11) vorgesehen ist, wobei der Kraftstoffdruckregler (20) ein Gehäuse (38) aufweist mit zumindest einem Kraftstoffeinlass (48) in seinem oberen Teil zur Kommunikation mit der Zwischenkammer (24) und mit zumindest einem Kraftstoffauslass (62) in seinem unteren Teil, **gekennzeichnet durch** einen Wassersammler (66), der in der Zwischenkammer (24) eingefügt ist, über dem Kraftstoffeinlass (48) des Kraftstoffdruckreglers (20), wobei der Wassersammler (66) einen Aussparungsteil (68) gegenüber der Öffnung (26, 28) aufweist, um Wasser zu halten, das **durch** die Schwerkraft aus der Öffnung (26, 28) fließt, während die Kraftstoffpumpe (14) inaktiv ist.

2. Kraftstoffdruckregleranordnung (13) gemäß dem vorhergehenden Anspruch, **dadurch gekennzeichnet, dass** der Wassersammler (66) eine ringförmige Form hat mit einer zentralen Bohrung (70) zur Kommunikation zwischen der Zwischenkammer (24) und dem Kraftstoffeinlass (48) des Kraftstoffdruckreglers (20).

3. Kraftstoffdruckregleranordnung (13) gemäß dem vorhergehenden Anspruch, **dadurch gekennzeichnet, dass** der Aussparungsteil (68) einen im Wesentlichen U-förmigen axialen Querschnitt hat.

4. Kraftstoffdruckregleranordnung (13) gemäß Anspruch 2 oder 3, **dadurch gekennzeichnet, dass** der Aussparungsteil (68) des Wassersammlers (66) im Wesentlichen ringförmig ist.

5. Kraftstoffdruckregleranordnung (13) gemäß dem vorhergehenden Anspruch, **dadurch gekennzeichnet, dass** die innere Umfangswand (78) des Aussparungsteils (68) höher ist als die äußere Umfangswand (76).

6. Kraftstoffdruckregleranordnung (13) gemäß einem der Ansprüche 2 bis 5, **dadurch gekennzeichnet, dass** die zentrale Bohrung (70) einen sich verjüngenden unteren Teil (72) hat.

7. Kraftstoffdruckregleranordnung (13) gemäß einem der Ansprüche 2 bis 6, **dadurch gekennzeichnet, dass** die Unterseite des Wassersammlers (66) eine ringförmige radiale Oberfläche (80) hat, die eine Widerlagerfläche für den Kraftstoffdruckregler (20) bildet.

8. Kraftstoffdruckregleranordnung (13) gemäß einem der vorhergehenden Ansprüche, **dadurch gekennzeichnet, dass** der Wassersammler (66) in das Adaptergehäuse (16) eingepresst ist.

9. Kraftstoffdruckregleranordnung (13) gemäß einem der vorhergehenden Ansprüche, **dadurch gekennzeichnet, dass** die Zwischenkammer (24) zumindest eine Einlassöffnung (26) hat, die mit dem stromaufwärtigen Teil der Kraftstoffversorgungsleitung (11) kommuniziert, und eine Auslassöffnung (28), die mit dem stromabwärtigen Teil der Kraftstoffversorgungsleitung (11) kommuniziert, wobei jede Öffnung (26, 28) gegenüber einem Abschnitt des Aussparungsteils (68) des Wassersammlers ist.

10. Kraftstoffliefermodulanordnung (10), **gekennzeichnet durch** ein Aufweisen einer Kraftstoffdruckregleranordnung (13) gemäß einem der vorhergehenden Ansprüche.

11. Kraftstofftank (84), der eine abnehmbare Tankabdeckung (82) aufweist, **gekennzeichnet durch** ein Aufweisen einer Kraftstoffdruckregleranordnung (13) gemäß einem der Ansprüche 1 bis 9, die auf der Tankabdeckung (82) angeordnet ist.

## Revendications

1. Ensemble régulateur de pression de carburant (13) pour un véhicule automobile comprenant un régulateur de pression de carburant (20) qui est monté dans un boîtier adaptateur (16) le long d'un axe principal (A1), ledit boîtier adaptateur (16) comprenant une chambre intermédiaire (24) qui est fermée à sa partie inférieure par le régulateur de pression de carburant (20) et qui est dotée d'au moins une ouverture (26, 28) pour une communication avec un conduit d'alimentation de carburant (11), ledit régulateur de pression de carburant (20) comprenant un carter (38) ayant au moins une entrée de carburant (48) dans sa portion supérieure pour une communication avec la chambre intermédiaire (24) et ayant au moins une sortie de carburant (62) à sa portion inférieure, **caractérisé par** un collecteur d'eau (66) inséré dans la chambre intermédiaire (24), au-dessus de l'entrée de carburant (48) du régulateur de pression de carburant (20), ledit collecteur d'eau (66) comprenant une portion évidée (68) en face de l'ouverture (26, 28) afin de retenir l'eau qui s'écoule vers le bas par gravité depuis l'ouverture (26, 28) lorsque la pompe à carburant (14) tourne à vide.

2. Ensemble régulateur de pression de carburant (13) selon la revendication précédente, **caractérisé en ce que** ledit collecteur d'eau (66) a une forme annulaire avec un perçage central (70) pour une communication entre la chambre intermédiaire (24) et l'entrée de carburant (48) du régulateur de pression de carburant (20).

3. Ensemble régulateur de pression de carburant (13) selon la revendication précédente, **caractérisé en ce que** ladite portion évidée (68) a une section axiale sensiblement en forme de U.

4. Ensemble régulateur de pression de carburant (13) selon la revendication 2 ou 3, **caractérisé en ce que** ladite portion évidée (68) du collecteur d'eau (66) est sensiblement annulaire.

5. Ensemble régulateur de pression de carburant (13) selon la revendication précédente, **caractérisé en ce que** la paroi périphérique intérieure (78) de la portion évidée (68) est plus haute que la paroi périphérique extérieure (76).

6. Ensemble régulateur de pression de carburant (13) selon l'une quelconque des revendications 2 à 5, **caractérisé en ce que** ledit perçage central (70) a une portion inférieure effilée (72).

7. Ensemble régulateur de pression de carburant (13) selon l'une quelconque des revendications 2 à 6, **caractérisé en ce que** le fond du collecteur d'eau (66) a une surface radiale annulaire (80) formant une surface de butée pour le régulateur de pression de carburant (20).

8. Ensemble régulateur de pression de carburant (13) selon l'une quelconque des revendications précédentes, **caractérisé en ce que** ledit collecteur d'eau (66) est engagé à la presse sur le boîtier d'adaptateur (16).

9. Ensemble régulateur de pression de carburant (13) selon l'une quelconque des revendications précédentes, **caractérisé en ce que** ladite chambre intermédiaire (24) a au moins une ouverture d'entrée (26) communiquant avec la portion amont du conduit d'alimentation de carburant (11) et une ouverture de sortie (28) communiquant avec la portion aval du conduit d'alimentation de carburant (11), chacune des ouvertures (26, 28) étant en face d'une section de la portion évidée du collecteur d'eau (68).

10. Ensemble formant module de fourniture de carburant (10) **caractérisé en ce qu'**il comprend un ensemble régulateur de pression de carburant (13) selon l'une quelconque des revendications précédentes.

11. Réservoir de carburant (84) comprenant un couvercle de réservoir amovible (82), **caractérisé en ce qu'**il comprend un ensemble régulateur de pression de carburant (13) selon l'une quelconque des revendications 1 à 9, qui est agencé sur le couvercle de réservoir (82).
